# EUROPEAN PATENT APPLICATION

(11) **EP 2 617 643 A1**
(43) Date of publication of application: **24.07.2013**
(21) Application number: 12151568.8
(22) Date of filing: 18.01.2012
(51) Int. Cl.: B63C 11/26

(54) **Dive tool**

(71) Applicant: Nederlandse Organisatie voor Toegepast -Natuurwetenschappelijk Onderzoek TNO, 2628 VK Delft (NL)
(72) Inventor: Dol, Henry Simon, 2628 VK Delft (NL); Hunter, Alan Joseph, 2628 VK Delft (NL)
(74) Representative: Jansen, Cornelis Marinus

(57) **Abstract**

Dive tool (1), comprising:
- an underwater breathing apparatus (10), including:
o a diving cylinder (12), configured to contain a pressurized breathing gas;
o a diving regulator (14), operably connected to the diving cylinder;

- a microphone (20), integrated into the diving regulator (14), and configured to generate an electric audio signal;
- an electroacoustic transducer (30), operably connected to the microphone (20), and configured to produce sound in response to the electric audio signal received therefrom; and
- a battery (40), operably connected to and configured to power the electroacoustic transducer (30).

## Description

### Field of the invention

The present invention relates to a multipurpose dive tool, suitable for, inter alia, underwater communication.

### Background

The ability to communicate with each other is of crucial importance to the safety of recreational divers. For basic underwater and surface communication, divers usually use hand signals which allow them to express a limited range of messages relating to, for example, available air supply, diving directions, and situations of distress. These hand signals, however, do not enable divers to exchange detailed information, and differentiations in an intended message may easily be lost. Furthermore, a priori visual line-of-sight contact is required for hand signal communication to be initiated and continued.

To obviate these problems, professional dive teams of for instance police, military, and search and rescue forces, and archaeological and salvage dive teams, may employ advanced, and therefore expensive, wireless - typically ultrasound based - underwater communication systems. Due to the fact that communication is modulated on an (ultrasonic) carrier wave, and thus requires demodulation to be understood, transmitter and receiver equipment need to be geared to one another. In practice this may lead to compatibility issues where divers have obtained their equipment from different manufacturers, since standardization in this field is lacking. In addition, many such communication systems make use of full-face masks, which may have a large impact on the diving gear and negatively affects the diving experience for recreational divers.

### Summary of the invention

The spectrum of underwater communication systems in between hand signals and professional ultrasound systems features a various products for recreational underwater communication. These products include relatively inexpensive, mechanical, stand-alone megaphone-like apparatus for the transfer of voice sound at audible frequencies across short distances, such as those disclosed in US 5,877,460 (Stachowski) and US 3,828,887 (Alexander). Others feature electrical systems, to be integrated with the primary air supply of a diver. Both classes of apparatus are practically unusable in case of, for instance, an out-of-air emergency or other malfunction of the underwater respiration support system/scuba gear, since there is no supply of breathing air to enable speaking.

It is therefore an object of the present invention to provide for an economically manufacturable dive tool that enables underwater communication between divers, in particular in case of an emergency, such as an out-of-air emergency.

To this end, the present invention is directed to a multipurpose dive tool. The dive tool may include an underwater breathing apparatus, comprising a diving cylinder configured to contain a pressurized breathing gas, and a diving regulator that is operably connected to the diving cylinder. The dive tool may further include a microphone that is integrated into the diving regulator, and configured to generate an electric audio signal. The tool may also include an electroacoustic transducer, operably connected to the microphone and configured to produce sound in response to the electric audio signal received therefrom, and a battery that is operably connected to and configured to power the electroacoustic transducer. For comfort of use and manageability of the dive tool, the diving cylinder may preferably take the form of a so-called pony bottle, having an internal cylinder volume/water capacity of less than 2 liters, and preferably less than 1 liter.

The dive tool enables the direct transfer of audible voice/speech sound between divers. It does not modulate the speech on a carrier wave, and its use does therefore not require the addressees of the communication to have matching equipment. A particularly advantageous feature of the dive tool is its integrated, dedicated air supply. During normal operation, the air supply enables a user to speak for a longer period of time, without repeatedly leaving him gasping for air and searching for his primary regulator, as is the case with some conventional devices. In addition, the dedicated air supply of the dive tool may serve as a spare air supply, next to a primary air supply that forms part of the normal scuba outfit, so as to enable a diver to call out for help in a situation of distress and/or to reach the (alternate) second stage of his dive buddy when his primary air supply fails. Furthermore, relative to in particular the aforementioned professional underwater communication systems, the dive tool offers the advantages of being affordable for recreational divers, and having little impact on a standard diver's outfit (e.g. no full-face mask). Relative to known, mechanical under water communication devices, it also offers superior sound quality and volume. Hence it is believed the dive tool will make good quality underwater communication accessible to sport divers, and improve the safety of their practice.

In an embodiment, the dive tool may include a controller that is operably connected to the microphone, the electroacoustic transducer and the battery. The controller may include a signal processor that is configured to process the electric audio signal received from the microphone, and to output the processed audio signal to the electroacoustic transducer. The signal processor may be capable of performing a variety of different, user selectable, operations on the audio signal, which in this context is considered to include the operation of generating an audio signal that substitutes for the audio signal received from the microphone.

In one embodiment the signal processor may, for example, be configured to amplify the electric audio signal, so as to enable a user to transfer his message clearly over a longer distance. To enable adjustment of the level of amplification, the controller may be provided with a user volume control.

In another embodiment the signal processor may serve as an equalizer, and be configured to process the electric audio signal by adjusting the balance between its different frequency components according to a predetermined equalization scheme.

The equalization scheme may serve to optimize the transmission of voice/speech sound through the water, and to ensure audibility and recognizability of the content of the communication by the receiving parties, in particular despite interfering environmental conditions. Such environmental conditions may include noises inherent in diving activities such as, for instance, those originating from marine vessels, off-shore industry, and sea life. In one embodiment, the controller may enable sampling of the ambient ambient or sound environment via the microphone (or another microphone, disposed outside of (the mouth mask of) the regulator); subsequent analysis of the frequency spectrum of sampled sound environment, and computation of an equalization scheme that reflects which frequencies in the electric audio signal from the microphone require suppression or amplification to enhance voice transmission in the environment. The computed equalization scheme may then be applied to the electric audio signal from the microphone, until a new calibration or determination of the equalization scheme is performed. An alternative to, or in addition to, this adaptive equalization in relation to the actual environment, the signal processor may be fitted with a number of factory-preset equalization schemes that reflect typical sound environments, e.g. a harbour environment, or open sea.

In yet another embodiment, the signal processor may be configured to generate an electric audio signal that reflects an alarm sound or distress signal (e.g. a siren), to substitute this audio signal for the audio signal received from the microphone, and to output it to the electroacoustic transducer, e.g. an underwater speaker. To enable activation of the alarm function of the controller, it may be provided with a dedicated, easily accessible alarm button.

These and other features and advantages of the invention will be more fully understood from the following detailed description of certain embodiments of the invention, taken together with the accompanying drawings, which are meant to illustrate and not to limit the invention.

### Brief description of the drawings

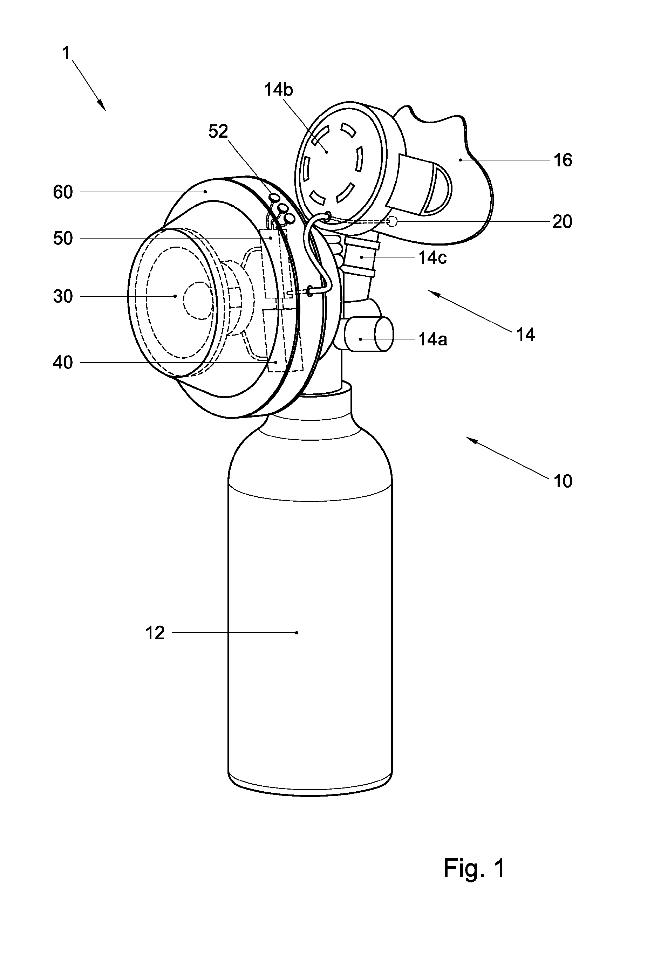

Fig. 1 is a schematic perspective view of an exemplary embodiment of a dive tool according to the present invention.

### Detailed description

Fig. 1 is a schematic perspective view of an exemplary embodiment of a dive tool 1 according to the present invention. In general, the tool 1 may include an underwater breathing apparatus 10, a microphone 20, an electro acoustic transducer 30, and a battery 40.

The underwater breathing apparatus 10 of the under water dive tool 1 forms an independent breathing set configured to provide a diver with a breathing gas, e.g. a mixture of oxygen and an inert gas such as nitrogen. To this end, the underwater breathing apparatus 10 may include a diving cylinder 12, configured to contain the breathing gas in pressurized form, and a diving regulator 14 that is operably connected to the diving cylinder 12. In a preferred embodiment, the diving cylinder 12 may take the form of a so-called pony bottle, having an internal cylinder volume/water capacity of less than 2 liters, and preferably less than 1 liter, e.g. 0.75 liters. As the diving cylinder 12 may typically be the most voluminous and heavy part of the tool 1, a pony bottle-sized diving cylinder 12 may ensure easy manageability of the tool 1, both above and under water. In addition, the relatively small size of the cylinder 12 may enable a diver to conveniently carry the tool 1 on (a front side of) his stab jacket/buoyancy compensator without it being a hindrance. For the purpose of releasably connecting the tool 1 to such a jacket, it may include releasable fastening means, such as a clip (not shown). The diving regulator 14, configured to reduce the pressurized breathing gas from the diving cylinder 12 to ambient pressure and subsequent delivery thereof to the diver, may be of a generally conventional type, e.g. a single hose two-stage regulator, including a first stage regulator 14a connected to the diving cylinder 12, a second stage (open circuit) regulator 14b comprising a demand valve, and a (short) intermediate pressure hose or tube 14c that fluidly interconnects the first and second stages 14a, 14b. In one embodiment, the first and second stages 14a, 14b of the regulator 14 may be integrated, possibly with the diving cylinder 12, for compactness.

Unlike most conventional second stage regulators, a second stage 14b of the diving regulator 14 of the tool 1 according to the present invention may preferably come without a mouthpiece for the diver to bite down on. This is because the second stage 14b of the tool 1 is not intended to be used for breathing over prolonged periods of time, but primarily to be talked into and to enable breathing while doing so, or to be used during a relatively brief and rare out-of-air emergency ascent or buddy approach. Hence, the second stage regulator may preferably include a flexible mouth mask 16 with an oral cavity into which the diver can talk and breathe, and inside of which both the demand valve and the microphone 20 are disposed.

Furthermore, unlike conventional second stage regulators, the second stage of the diving regulator 14 according to the present invention may be fitted with a microphone 20, such as a hydrophone. The microphone 20, which itself may be an piezoelectric or electroacoustic transducer configured to convert acoustic energy into electric energy so as to generate an electric audio signal reflecting captured speech, may be operably connected to another electroacoustic transducer 30 in the form of an underwater speaker, which may be known per se. The underwater speaker 30 may be configured to produce sound in response to the electric audio signal received from the microphone 20. For powering the underwater speaker 30, the tool 1 may include a preferably rechargeable battery 40 that is operably connected thereto. It is understood that the tool 1 may comprise an electronic amplifier, for example incorporated into the (signal processor of the) controller to be discussed hereafter, to amplify the electric audio signal and drive the underwater speaker 30 by use of power from the battery 40.

In a particularly advantageous embodiment, the tool 1 may include a controller 50. The controller 50 may be operably connected to the microphone 20, the underwater speaker 30 and the battery 40, and include a signal processor that is configured to process the electric audio signal received from the microphone 20, and to output the processed audio signal to the underwater speaker 30. The signal processor may be configured to perform a variety of operations on the electric audio signal, and the controller 50 may be fitted with one or more user controls 52 to enable a diver to select such an operation and/or to control the execution thereof.

As in the depicted embodiment, all electronic components 30, 40, 50 aside from the microphone 20 may be accommodated in a watertightly closable/sealable housing 60, which may be attached to the diving cylinder 20, the first stage 14a, or another suitable part of the dive tool 1. The user controls 52 of the controller 50 may be provided on an outside of the housing 60, so as to enable access to them.

By way of example, some operations that may be performed by the signal processor of the controller 50 will be discussed briefly.

In one embodiment of the dive tool 1 the signal processor may be configured to amplify the electric audio signal, so as to enable a user to transfer his message clearly over a longer distance. To enable adjustment of the level of amplification, the controller 50 may be provided with a user volume control 52.

In another embodiment the signal processor may serve as an equalizer, and be configured to process the electric audio signal by adjusting the balance between its different frequency components according to a predetermined equalization scheme.

The equalization scheme may serve to optimize the transmission of voice/speech sound through the water, and to ensure audibility and recognizability of the content of the communication by the receiving parties, in particular despite interfering environmental conditions. Such environmental conditions may include noises inherent in diving activities such as, for instance, those originating from marine vessels, off-shore industry, and sea life. In one embodiment, the controller 50 may enable sampling of the ambient sound environment via the microphone 20 (or another microphone); subsequent analysis of the frequency spectrum of sampled sound environment, e.g. by means of a Fourier analysis/Discrete Fourier Transform (DFT); and computation of an equalization scheme that reflects which frequencies in the electric audio signal from the microphone require suppression or amplification to enhance voice transmission in the environment. The computed equalization scheme may then be applied to the electric audio signal from the microphone 20, until a new calibration or determination of the equalization scheme is performed. An alternative to, or in addition to, this adaptive equalization in relation to the actual environment, the signal processor may be fitted with a number of factory-preset equalization schemes that reflect typical sound environments, e.g. a harbour environment, or open sea.

In yet another embodiment, the signal processor may be configured to generate an electric audio signal that reflects an alarm sound or distress signal (e.g. a siren), to substitute this audio signal for the audio signal received from the microphone, and to output it to the electroacoustic transducer, e.g. an underwater speaker. To enable activation of the alarm function of the controller 50, it may be provided with a dedicated, easily accessible alarm button 52.

In still another embodiment, the dive tool 1 may further comprise a demand valve (not shown separately) that is integrated into the diving regulator 14, more in particular in the second stage 14b thereof, and a demand valve sensor that is configured to detect an open state of the demand valve during inhalation (or, alternatively, to detect a closed state of the demand valve during exhalation). The demand valve sensor may be operably connected to the controller 50, which may be configured to disable or interrupt sound production by electroacoustic transducer 30 when the demand valve sensor detects an open (or non-closed) state of the demand valve. Accordingly, the generally meaningless and loud sound of inhalations may automatically be prevented from being transmitted over the electroacoustic tranducer 30. It is understood that interruption of sound production by the electroacoustic transducer 30 may include any suitable measure to prevent transmission of the audio signal, such as, for example, temporarily blanking signal output to the electroacoustic transducer 30, or cutting power to the electroacoustic transducer 30.

Where desired, the controller 50 may of course also be fitted with one or more indicator lights or gauges that indicate its status (e.g. on/off, selected volume and/or selected equalization scheme), the remaining capacity of the battery 40 (e.g. full/half-full/empty), and, for instance in case the tool 1 is fitted with a controller-connected pressure sensor for sensing the pressure in the diving cylinder 12, the remaining capacity thereof.

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

List of elements
- 1: dive tool
- 10: underwater breathing apparatus
- 12: diving cylinder
- 14: diving regulator
- 14a: first stage
- 14b: second stage
- 14c: short tube connecting first and second stages
- 16: flexible mouth mask
- 20: microphone
- 30: electroacoustic transducer
- 40: battery
- 50: controller
- 52: user controls for controlling the operation of the controller
- 60: watertight housing for electronics

## Claims

1. Dive tool (1), comprising:
- an underwater breathing apparatus (10), including:
o a diving cylinder (12), configured to contain a pressurized breathing gas;
o a diving regulator (14), operably connected to the diving cylinder;
- a microphone (20), integrated into the diving regulator (14), and configured to generate an electric audio signal;
- an electroacoustic transducer (30), operably connected to the microphone (20), and configured to produce sound in response to the electric audio signal received therefrom; and
- a battery (40), operably connected to and configured to power the electroacoustic transducer (30).

2. The dive tool according to claim 1, wherein the diving cylinder (12) is a pony bottle having an internal cylinder volume of less than 2 liters, and preferably less than 1 liter.

3. The dive tool according to any of the claims 1-2, further comprising:
- a controller (50) that is operably connected to the microphone (20), the electroacoustic transducer (30) and the battery (40), wherein said controller includes a signal processor that is configured to process the electric audio signal received from the microphone, and to output the processed audio signal to the electroacoustic transducer.

4. The dive tool according to claim 3, wherein the signal processor is configured to amplify the electric audio signal.

5. The dive tool according to claim 3 or 4, wherein the signal processor is configured to process the electric audio signal by adjusting the balance between its different frequency components according to a predetermined equalization scheme.

6. The dive tool according to claim 5, wherein the controller (50) is configured:
- to sample a sound ambient via the microphone (20);
- to perform a frequency spectrum analysis of the sampled sound environment, and to compute, on the basis of said analysis, an equalization scheme that reflects which frequencies in the electric audio signal from the microphone require suppression or amplification to enhance voice transmission in the environment; and
- to have the signal processor apply said computed equalization scheme to the electric audio signal from the microphone (20).

7. The dive tool according to any of the claims 3-6, wherein the signal processor is configured to generate an electric audio signal that reflects an alarm sound, and to output this audio signal to the electroacoustic transducer (30).

8. The dive tool according to any of the claims 3-7, further comprising:
- a demand valve, integrated into the diving regulator (14);
- a demand valve sensor, configured to detect an open state of the demand valve during inhalation; and
wherein the demand valve sensor is operably connected to the controller (50), and wherein the controller is configured to disable sound production by the electroacoustic transducer (30) when the demand valve sensor detects an open state of the demand valve.
